(19) Europäisches Patentamt
European Patent Office
Office européen des brevets

(11) **EP 2 724 987 B1**

(12) **EUROPEAN PATENT SPECIFICATION**

(45) Date of publication and mention of the grant of the patent:
**15.08.2018   Bulletin 2018/33**

(21) Application number: **12802912.1**

(22) Date of filing: **25.05.2012**

(51) Int Cl.:
*C02F 1/28* (2006.01)          *C02F 1/52* (2006.01)
*B01J 20/10* (2006.01)        *B01J 20/28* (2006.01)
*B01J 20/30* (2006.01)        *C05B 3/00* (2006.01)
*C05D 3/04* (2006.01)          *C05F 7/00* (2006.01)

(86) International application number:
**PCT/JP2012/063539**

(87) International publication number:
**WO 2012/176579 (27.12.2012 Gazette 2012/52)**

(54) **METHOD FOR RECOVERING PHOSPHORUS AND USING SAME AS FERTILIZER**

VERFAHREN ZUR RÜCKGEWINNUNG VON PHOSPHOR UND SEINE VERWENDUNG ALS DÜNGEMITTEL

PROCÉDÉ DE RÉCUPÉRATION DE PHOSPHORE ET SON UTILISATION COMME ENGRAIS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2011   JP 2011140017
24.06.2011   JP 2011140019**

(43) Date of publication of application:
**30.04.2014   Bulletin 2014/18**

(73) Proprietors:
• **Taiheiyo Cement Corporation
Tokyo 135-8578 (JP)**
• **Onoda Chemical Industry Co., Ltd.
Tokyo 100-0004 (JP)**

(72) Inventors:
• **AMAMOTO Yusaku
Sakura-shi
Chiba 285-8655 (JP)**
• **AKETO Tsuyoshi
Sakura-shi
Chiba 285-8655 (JP)**
• **NOMURA Koji
Hokuto-shi
Hokkaido 049-0193 (JP)**
• **ICHITSUBO Kouki
Sakura-shi
Chiba 285-8655 (JP)**
• **MINOWA Nobutaka
Tokyo 100-0004 (JP)**
• **NAKAMURA Hiroshi
Tokyo 174-0054 (JP)**
• **NISHIMURA Yasumasa
Tokyo 174-0054 (JP)**

(74) Representative: **Isarpatent
Patent- und Rechtsanwälte Behnisch Barth
Charles
Hassa Peckmann & Partner mbB
Friedrichstrasse 31
80801 München (DE)**

(56) References cited:
JP-A- 9 308 889          JP-A- 61 263 636
JP-A- 62 152 588        JP-A- 2009 285 635
JP-A- 2009 285 636    JP-A- 2012 050 975
JP-A- 2012 086 107    US-A- 4 707 270

• MASAHIDE UEMOTO ET AL.: 'Hishoshitsu Keisan Calcium Suiwabutsu o Mochiita Rin Kaishuho' JAPAN SOCIETY FOR ENVIRONMENTAL BIOTECHNOLOGY TAIKAI PROGRAM KOEN YOSHISHU vol. 34, 25 June 2008, page 17, XP008172790
• NOBUTAKA MINOWA ET AL.: 'Hishoshitsu Keisan Calcium Suiwabutsu o Mochiita Shoka Odei Datsurieki kara no Rin Kaishuho' DAI 43 KAI JAPAN SOCIETY ON WATER ENVIRONMENT NENKAI KOENSHU vol. 43, 16 March 2009, page 173, XP008172791

- **TAKAHIRO YAMASHITA ET AL.: 'Hishoshitsu Keisan Calcium Suiwabutsu (CSH) Tenka ni yoru Chikusha Osui Shorisui kara no Shikido Oyobi Rin no Doji Jokyo' DAI 47 KAI PROCEEDINGS OF FORUM ON ENVIRONMENTAL ENGINEERING RESEARCH vol. 47, 12 November 2010, pages 13 - 15, XP008172792**
- **NOBUTAKA MINOWA: 'Kaishu Rin Kagobutsu no Rinsanshitsu Hiryo eno Oyo' ENVIRONMENTAL SOLUTION TECHNOLOGY vol. 8, no. 10, 01 October 2009, pages 16 - 21, XP008172732**
- **JUNPEI KAGAMI ET AL.: 'Hishoketsu Keisan Calcium Suiwabutsu ni yoru Rin Kaishu Gijutsu no Kaihatsu to Kaishu Kiko no Kaimei' ABSTRACTS OF ANNUAL MEETING OF THE SOCIETY OF CHEMICAL ENGINEERS vol. 77, 15 February 2012, JAPAN, page 641, XP008172793**

Remarks:
The file contains technical information submitted after the application was filed and not included in this specification

**Description**

TECHNICAL FIELD

The present invention relates to a method for recovering phosphorus from waste water from phosphorus sources such as sewage-treatment plants, and a method for fertilizing the recovered phosphorus.

BACKGROUND ART

Phosphorus, which is one of the three elements of fertilizers, has been imported the whole quantity from overseas since raw material of phosphorus depends on rock phosphate and the rock phosphate is not mined in our country. There is a possibility that acquisition of the rock phosphate may become very difficult from now on since it is expected that the rock phosphate will be drained in the future and so on, therefore, it has actively been performed developing a technology of recovering phosphorus that is discarded without being used in our country and utilizing the recovered phosphorus as fertilizers.

PRIOR ART DOCUMENTS

PATENT DOCUMENTS

Patent Document 1: Japanese Patent Publication No. 2009-285635
Patent Document 2: Japanese Patent Publication No. 2009-285636

SUMMARY OF THE INVENTION

PROBLEM TO BE SOLVED BY THE INVENTION

However, since there are problems in respect of high recovery cost of phosphorus and usage of recovered phosphorus, it is in a situation where phosphorus recovery business does not progress. Therefore, although a huge quantity of phosphorus, which is equal to the volume of imported rock phosphate, is accumulated in domestic sewage-treatment plants in Japan, only approximately 5% of the phosphorus is effectively used as phosphorus resources.

Moreover, a phosphorus recovery material whose principal component is calcium silicate is known in the past, and varieties of recovery materials with high reactivity with phosphorus and with excellent settleability of flocculates that are formed by adsorbing phosphorus have been proposed. For example, a phosphorus recovery material that is a fine powder having an average particle size (a median diameter) of 150 $\mu$m or less and is formed of a calcium silicate hydrate with a pore volume of 0.3 cm$^3$/g or more (Patent Document 1), or a phosphorus recovery material that is formed of a calcium silicate hydrate with a BET specific surface area of 80 m$^2$/g or more and a pore volume of 0.5 cm$^3$/g or more (Patent Document 2).

The phosphorus recovery materials described in Patent documents 1 and 2 are high in reactivity with phosphorus; generate hydroxy apatite; are able to rapidly reduce phosphorus concentration in waste water; and have an advantage that phosphorus recovery ratio is higher than other calcareous materials such as slaked lime.

Then, the object of the present invention is to provide a method for recovering phosphorus accumulated in sewage-treatment plants or the like at a low cost in such a manner as to easily utilize recovered phosphorus with phosphorus recovery material with high reactivity with phosphorus and excellent flocculates settleability after adsorption, and a method for effectively utilizing the recovered phosphorus as a high quality fertilizer.

MEANS OF SOLVING THE PROBLEMS

To achieve the object, the present invention relates to a phosphorus recovery method, and the method comprising the steps of: adsorbing (reacting) phosphorus in a waste water from a phosphorus source to a phosphorus recovery material formed of an amorphous calcium silicate-based material; and recovering the phosphorus recovery material with the adsorbed phosphorus.

The amorphous calcium silicate-based material has high affinity with phosphorus, and the material is porous and has large specific surface area, so that it has high phosphorus adsorption capability, which can selectively adsorb phosphorus, therefore, it is possible to recover phosphorus, which is accumulated in phosphorus sources, at a low cost in such a manner as to be utilized with ease.

In the above phosphorus recovery method, a pH value of a waste water that is obtained by adding the phosphorus recovery material to the waste water from the phosphorus source can be adjusted to be 7.0 or higher. With this, while preventing the generated calcium phosphate from dissolving on a liquid side, it can prevent that calcium in the waste water turns into calcium carbonate, and calcium phosphate becomes hard to be generated etc., which allows phosphorus to more efficiently be adsorbed by the phosphorus recovery material.

In the phosphorus recovery method, the phosphorus recovery material can be added after the waste water from the phosphorus source is decarbonated by reducing a pH value thereof to 6.0 or lower. With this, calcium carbonate is prevented from generating from carbonic acid contained in the waste water, which allows phosphorus to still more efficiently be adsorbed.

In the phosphorus recovery method, a slurry containing the phosphorus recovery material that adsorbs phosphorus in the waste water may be solid-liquid separated to obtain a dehydrated cake-like phosphorus recovered material, and an obtained filtrate can be used at the phosphorus source. With this, a phosphorus recovery material with easy handling can be obtained.

In the phosphorus recovery method, the phosphorus source may be a sewage-treatment plant, which allows a large amount of phosphorus that is accumulated in sewage-treatment plants to be recovered at a low cost in such a manner that the recovered phosphorus is utilized with ease.

The waste water can be one separated from a sludge generated at the sewage-treatment plant, and making the sludge not to be included in the phosphorus recovered material allows obtaining a phosphorus recovered material that is desirable when effectively used for fertilizers.

In the phosphorus recovery method, the phosphorus recovery material is an amorphous calcium silicate hydrate alone or an aggregate of an amorphous calcium silicate hydrate and $Ca(OH)_2$ with a Ca/Si molar ratio of 0.8 or more and 20 or less.

Since the above-mentioned phosphorus recovery material includes the amorphous calcium silicate hydrate alone or the aggregate of the amorphous calcium silicate hydrate and $Ca(OH)_2$, these materials are excellent in function of adsorbing phosphorus, and flocculates formed by adsorbing phosphorus are good in settleability, so that phosphorus removing effect is high and a treatment time can be shortened.

In the phosphorus recovery method, the amorphous calcium silicate hydrate alone or the aggregate of the amorphous calcium silicate hydrate and $Ca(OH)_2$, is generated in an unheated state after mixing a sodium silicate solution and a lime.

Since a sodium silicate solution is used for the above-mentioned phosphorus recovery material as a raw material, non-dissolved substance except the amorphous calcium silicate hydrate and $Ca(OH)_2$ hardly arises; it is not necessary to perform hydrothermal synthesis at high temperature; and the phosphorus recovery material is formed of the amorphous calcium silicate hydrate alone or the aggregate of the amorphous calcium silicate hydrate and $Ca(OH)_2$, which are generated at room temperature, so that it is easy to produce, allowing economical phosphorus recovery.

In the phosphorus recovery method, the phosphorus recovery material is a solid matter obtained by solid-liquid separation and drying the amorphous calcium silicate hydrate alone or the aggregate of the amorphous calcium silicate hydrate and $Ca(OH)_2$, or a slurry or a paste including the amorphous calcium silicate hydrate alone or the aggregate of the amorphous calcium silicate hydrate and $Ca(OH)_2$.

A sodium silicate solution is used for the above-mentioned phosphorus recovery material as a raw material, so that in a process for generating the amorphous calcium silicate hydrate alone or the aggregate of the amorphous calcium silicate hydrate and $Ca(OH)_2$, non-dissolved substance except the amorphous calcium silicate hydrate and $Ca(OH)_2$ hardly arises, and it is not necessary to perform a process for separating non-dissolved substance other than the above. Therefore, the slurry or the paste including the phosphorus recovery material can be used as it is.

Further, the present invention is characterized by producing a fertilizer from the phosphorus recovered material recovered by one of the above methods.

With the present invention, adsorbing (reacting) phosphorus in a waste water in phosphorus sources to the phosphorus recovery material allows recovery of phosphorus to carried out at a low cost, and selectively adsorbing phosphorus is able to highly maintain quality of phosphorus fertilizers that are produced with phosphorus recovery material with adsorbed phosphorus, which makes it possible to recover phosphorus in a waste water from phosphorus sources and effectively utilize the recovered phosphorus as fertilizers.

EFFECTS OF THE INVENTION

As described above, with the present invention, it becomes possible to recover phosphorus accumulated in sewage-treatment plants or the like at a low cost in such a manner as to easily utilize recovered phosphorus, and to effectively utilize the recovered phosphorus as fertilizers.

BRIEF DESCRIPTION OF THE DRAWINGS

FIG. 1 is a configuration diagram showing an example of a system for carrying out a method for recovering phosphorus and using the same as fertilizer according to the present invention.

FIG. 2 is a configuration diagram showing the first embodiment of a facility carrying out a method for recovering phosphorus according to the present invention.

FIG. 3 is a configuration diagram showing the second embodiment of a facility carrying out a method for recovering phosphorus according to the present invention.

FIG. 4 is a graph showing an examination result of the method for recovering phosphorus according to the present invention.

FIG. 5 is a process chart showing a manufacturing example of a phosphorus recovery material utilized for the present invention.

FIG. 6 is XRD charts of an amorphous calcium silicate hydrate alone and an aggregate of an amorphous calcium silicate hydrate and $Ca(OH)_2$ obtained by examining property of a phosphorus recovery material utilized for the present invention (Verification Example 2).

MODE FOR CARRYING OUT THE INVENTION

Next, embodiments of the present invention will be explained with reference to drawings in detail. In the following explanations, the method for recovering phosphorus and using the same as fertilizer of the present invention is applied to a sewage-treatment plant as embodiments.

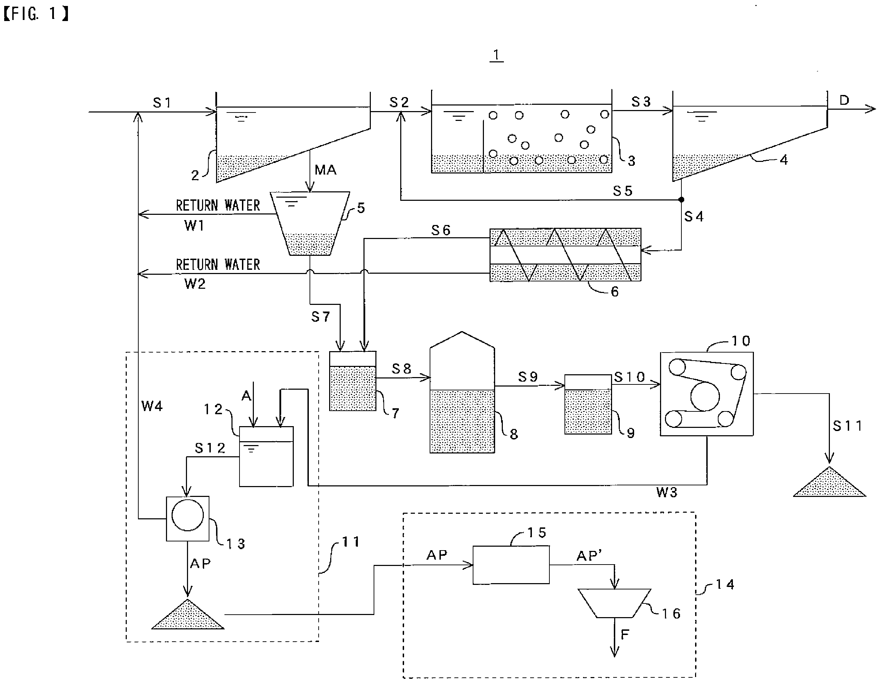

FIG. 1 shows a sewage-treatment plant and a phosphorus fertilizing equipment to which the present invention is applied, and this sewage-treatment plant 1 includes: a primary sedimentation tank 2 for condensing a suspended matter and a mud MA in a sewage S1, which precipitate easily, and for sending them to a concentration tank 5; a biological treatment tank 3 for treating with a microbe etc. a sewage S2, including organic substances, nitrogen, phosphorus and so on and to which precipitation processing is finished, from the primary sedimentation tank 2; a final sedimentation tank 4 for settling an activated sludge S3 treated by the biological treatment tank 3 over long period of time and discharging a filtrated liquid water D; a concentrator 6 for condensing an excess sludge S4 from the final sedimentation tank 4; a storage tank 7 for storing a thickened sludge S6 from the concentrator 6 and a thickened sludge S7 from the concentration tank 5; a methane fermentation tank 8 for decomposing a thickened sludge S8 discharged from the storage tank 7; a storage tank 9 for storing a sludge S9 discharged from the methane fermentation tank 8; a dehydrator 10 for solid/liquid separating a sludge S10 discharged from the storage tank 9 into a dehydration sludge S11 and a sludge filtrated liquor W3; and a phosphorus recovery equipment 11 for recovering phosphorus from the sludge filtrated liquor W3. Moreover, the phosphorus fertilizing equipment 14 includes a dryer 15 for drying a phosphorus recovered material AP recovered from the phosphorus recovery equipment 11 and a granulating machine 16 for granulating a phosphorus recovered material AP' discharged from the dryer 15.

The phosphorus recovery equipment 11 is provided with a phosphorus recovery process 12 for adsorbing phosphorus in a sludge filtrated liquor W3 with the phosphorus recovery material A, and a recovered material separation process 13 for recovering phosphorus recovered material AP from a slurry of the phosphorus recovery material A with adsorbed phosphorus. A specific example of the construction of the phosphorus recovery equipment 11 will be described below.

The recovery material A is made of amorphous calcium silicate-based material, and this material has high affinity with phosphorus, and is porous with a large specific surface area, so that it has high phosphorus adsorption capability, which can selectively adsorb phosphorus.

The amorphous calcium silicate-based material is one generated, for example, by generating an aqueous slurry with silicate raw material and a lime raw material; adding an alkali hydroxide thereto; and performing hydrothermal reaction thereto, which has an average particle size (a median diameter) of $10\mu m$ or more and $150\ \mu m$ or less; a pore volume of $0.5\ cm^3/g$ or more; or a BET specific surface area of $80\ m^2/g$ or more, or one made of an aggregate of an amorphous calcium silicate hydrate (hereinafter referred to as "CSH"), which is generated by adding $Ca(OH)_2$ to a sodium silicate solution, and unreacting $Ca(OH)_2$, which has a Ca/Si molar ratio of 1.5 to 10, or a composite that is obtained by recovering an aggregate of CSH, which is generated through hydrothermal synthesis by adding a slaked lime to a silica solution in which alikali soluble silica in a readily soluble silica raw material is dissolved by NaOH, and $Ca(OH)_2$, which contains 2.5 to 80 weight percent of $Ca(OH)_2$ and Ca/Si molar ratio of 1.0 to 7.0, or a composite that is obtained by recovering a CSH alone, which is generated by mixing a sodium silicate solution (water glass) and a lime raw material under unheating state, or an aggregate of CSH and $Ca(OH)_2$ (hereinafter referred to as "CSH aggregate"), which has a Ca/Si molar ratio of 0.8 to 20. Specific manufacturing method of the phosphorus recovery material A will be described below.

The phosphorus fertilizing equipment 14 is an equipment for manufacturing a fertilizer with a phosphorus recovered material AP recovered. Here, by simple techniques such as drying and granulating, it is also possible that the phosphorus recovery material A with adsorbed phosphorus is used as a fertilizer as it is. In addition, the treatment of drying, granulating and so on is carried out for easy fertilization and prevention of dust emission, and the effect as a fertilizer is not changed by this treatment, so that this treatment is just carried out if needed.

Next, a phosphorus recovery method in the sewage-treatment plant 1 with the above-mentioned construction and a fertilizing method in the phosphorus fertilizing equipment 14 will be explained with reference to FIG. 1.

The sewage S1 flowing into the sewage-treatment plant 1 is lead to the primary sedimentation tank 2; the suspending matter and the mud MA, which precipitate easily in the primary sedimentation tank 2 are concentrated and are transported to the concentration tank 5; and the sewage S2 containing organic substances etc. is supplied to the biological treatment tank 3 to be treated by the microbe etc.

The activated sludge S3 generated by the biological treatment tank 3 is settled over long period of time in the final sedimentation tank 4; the settled sludge is supplied to the concentrator 6 as an excess sludge S4; a return sludge S5 is returned to the biological treatment tank 3; and the supernatant liquid water D obtained in the final sedimentation tank 4 is discharged.

The excess sludge S4 from the final sedimentation tank 4 is concentrated with the concentrator 6, and after the excess sludge S4 is once stored in the storage tank 7 together with the thickened sludge S7 that is stored in the concentration tank 5, and are supplied to the methane fermentation tank 8. In the methane fermentation tank 8 is decomposed the thickened sludge S8 discharged from storage tank 7 by the microbe; after the generated sludge S9 is once stored in the storage tank 9; the sludge S10 is supplied to the dehydrator 10; a dehydration sludge S11 is obtained by solid/liquid separation; and the obtained sludge filtrated liquor W3 is supplied to the phosphorus recovery process 12 of the phosphorus recovery equipment 11.

In the phosphorus recovery process 12 is added the phosphorus recovery material A to the sludge filtrated liquor W3, and phosphorus included in the sludge filtrated liquor W3 is adsorbed by the phosphorus recovery material A. The slurry S12 including the phosphorus recovery material A with adsorbed phosphorus is solid/liquid separated in the recovered material separation process 13 to obtain the phosphorus recovered material AP, and the return water W4 generated in the recovered material separation process 13 is returned to the primary sedimentation tank 2 together with the return water W1 generated in the concentration tank 5 and the return water W2 generated in the concentrator 6. Since the phosphorus recovery material A with adsorbed phosphorus is excellent in aggregability and settleability, it can be filtered easily (solid-liquid separation) and can hold down equipment and operation costs of the sewage-treatment plant 1.

In the phosphorus fertilizing equipment 14, the phosphorus recovered material AP recovered by solid/liquid separation etc. is fertilized with the dryer 15 and the granulating machine 16 using simple methods such as drying and granulating. Since phosphorus selective adsorption of the phosphorus recovery material A is high, in the phosphorus fertilizing equipment 14, it is possible to produce fertilizers that satisfy regulations on quality such as Fertilizers Regulation Act.

As described above, with the present embodiment, in the phosphorus recovery equipment 11, the phosphorus recovered material AP can be recovered from the sludge filtrated liquor W3 that is generated in the sewage-treatment plant 1 at a low cost using the phosphorus recovery material A. In addition, with this embodiment, while being able to carry out fertilization of the collected phosphorus recovered material AP with the phosphorus fertilizing equipment 14, selectively adsorbing phosphorus to the phosphorus recovery material A allows, in the phosphorus fertilizing equipment 14, a high quality fertilizer F to be produced with the phosphorus recovered material AP, so that conventionally discarded phosphorus can be recovered and utilized as fertilizers.

In addition, in the above embodiment, since high-concentration phosphorus is included in the sludge filtrated liquor W3, the phosphorus recovery material A is added to the sludge filtrated liquor W3 to recover phosphorus, but since phosphorus is included in the return waters W1 and W2 also, the phosphorus recovery material A can be added to them to recover phosphorus.

Moreover, in the above embodiment, the sewage-treatment plant 1 equipped with the methane fermentation tank 8 is illustrated and phosphorus is recovered from the sludge filtrated liquor W3 that is discharged from the dehydrator 10 arranged downstream of the methane fermentation tank 8, but phosphorus is recoverable also from a sewage-treatment plant where the methane fermentation tank 8 does not exist in the same manner from the sludge filtrated liquor using the phosphorus recovery material. In this case, since small amount of carbon dioxide (carbonic acid ion) is contained in the sludge filtrated liquor, the process of aeration for removing carbon dioxide and the process of pH control performed in advance of the aeration process can be omitted.

Furthermore, in the above embodiment, phosphorus is recovered by adding the phosphorus recovery material A to the return waters W1, W2, and the sludge filtrated liquor W3, but it is also possible to apply this phosphorus recovery method to the thickened sludge and the sludges S6-S10.

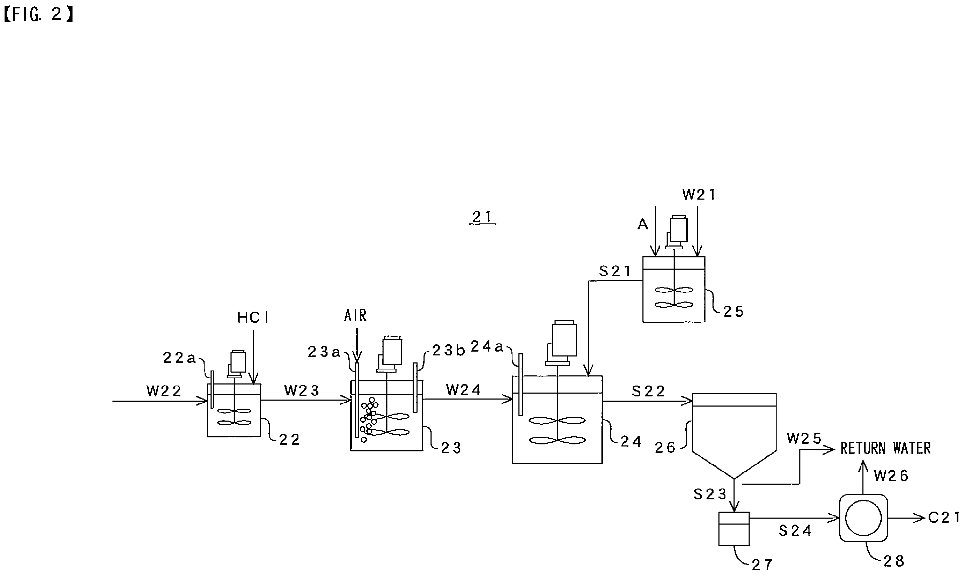

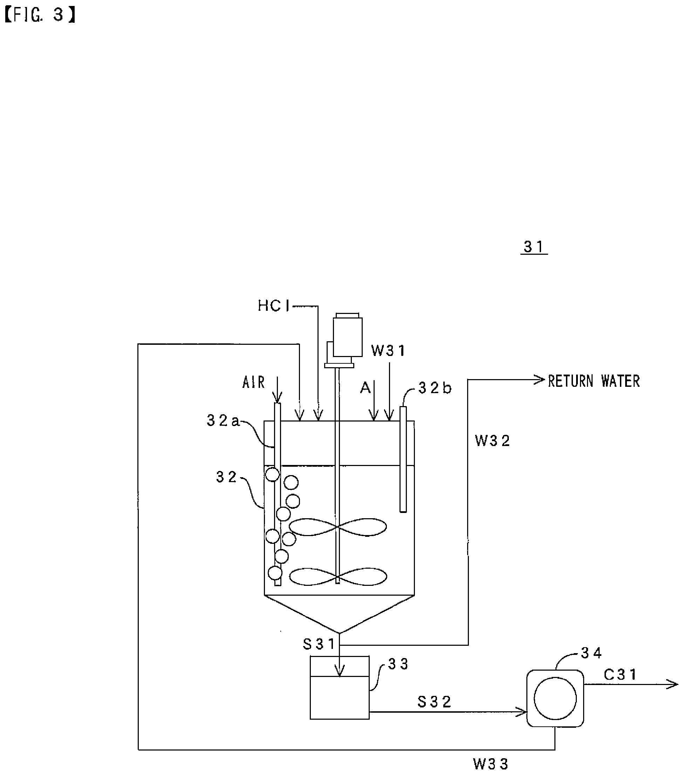

Next, a specific example of equipment composition of the above-mentioned phosphorus recovery equipment 11 will be explained with reference to FIGS. 2 and 3.

FIG. 2 shows, as the first example of the phosphorus recovery equipment 11, a continuous-type phosphorus recovery equipment 21, the phosphorus recovery equipment 21 is provided with a first pH control tank 22 equipped with a pH meter 22a for performing pH control of a sludge filtrated liquor W22 (equivalent to sludge filtrated liquor W3 shown in FIG. 1); a second pH control tank 23 equipped with an aeration device 23a for adding air to a sludge filtrated liquor W23 discharged from the first pH control tank 22 and agitating the liquor W23 to remove carbon dioxide and a pH meter 23b for performing pH control of the liquor W23; a CSH slurry adjustment tank 25 for adding a service water W21 to a phosphorus recovery material A of a dehydration cake of CSH to make the phosphorus recovery material A slurry; a phosphorus recovery tank 24 equipped with a pH meter for adding the CSH slurry S21 from the CSH slurry adjustment tank 25 to the sludge filtrated liquor W24 from the second pH control tank 23 to adsorb phosphorus in the sludge filtrated liquor W24 to the phosphorus recovery material A; a sedimentation tank 26 for performing sedimentation of a phosphorus recovered material in a slurry S22 that is discharged from the phosphorus recovery tank 24; a slurry tank 27 for storing a slurry S23 containing a phosphorus recovered material that is discharged from the sedimentation tank 26; a dehydrator 28 for solid-liquid separating a slurry S24 discharged from the slurry tank 27; and so on. In this connection, it is also possible to replace the sedimentation tank 26 with a separator. In addition, in place of the phosphorus recovery material A and the service water W21, feeding sodium silicate solution described later and a lime (slurry) allows the CSH slurry S21 to be produced.

Next, the operation of the phosphorus recovery equipment 21 with the above-mentioned construction will be explained with reference to FIG. 2.

After receiving the sludge filtrated liquor W22 in the first pH control tank 22, an acid such as hydrochloric acid is added to adjust the pH value of the sludge filtrated liquor W22 to 6.0 or less, preferably 5.3 or less in such a manner that carbonic acid ion in the sludge filtrated liquor W22 is changed to carbon dioxide, and the pH value of the downstream phosphorus recovery tank 24 becomes 7.0 or more. The reason why the pH value in the phosphorus recovery tank 24 is adjusted is to prevent calcium phosphate generated in the phosphorus recovery tank 24 from dissolving on liquid side, and to prevent calcium in the phosphorus recovery tank 24 from turning into calcium carbonate, which causes calcium phosphate to hardly be generated etc., and to more efficiently adsorb phosphorus with the phosphorus recovery material A.

Since the phosphorus recovery material A is an alkaline substance, adjusting the amount of acid added to the pH control tank 22, and adding this phosphorus recovery material to the phosphorus recovery tank 24 allow the pH value to become 7.0 or more. The kind of the acid will not be asked if carbonic acid ion can be changed to carbon dioxide.

Next, in the second pH control tank 23, carbon dioxide is removed from the sludge filtrated liquor W23 by agitating the sludge filtrated liquor W23 discharged from the first pH control tank 22 while aerating it by the aeration device 23a. With this, the pH value of the sludge filtrated liquor W23 rises. In this connection, the reason why a pH control tank is divided into two, which are the first pH control tank 22 and the second pH control tank 23, is that reducing pH value allows carbonic acid to fall, but the pH value rises in a process of decarbonation, so that a treatment with one pH control tank causes increase in acid consumption to maintain the pH value 5.3 or less.

Agitating time (residence time) is preferably 5 minutes or more and 120 minutes or less, and more preferably 15 minutes or more and 60 minutes or less. When the agitating time is less than 5 minutes, concentration of all the carbonic acid [carbonic acid ($H_2CO_3$), bicarbonate ($HCO_3^-$), and carbonate ($CO_3^{2-}$)] in the sludge filtrated liquor W24 becomes high, and the phosphorus recovery performance of the phosphorus recovery material falls, and when it exceeds 120 minutes, it is inferior to economical efficiency.

With the above pH adjustment, the concentration of all the carbonic acid in the sludge filtrated liquor W24 is controlled to be 150 mg/L or less more preferably 100 mg/L or less. When the concentration of all the carbonic acid is 150 mg/L or less, the phosphorus recovery performance of the phosphorus recovery material will become high.

On the other hand, in the CSH slurry adjustment tank 25, the phosphorus recovery material A and the service water W21 are mixed to generate the CSH slurry S21. The sludge filtrated liquor W24 after the pH control and the CSH slurry S21 are mixed in the phosphorus recovery tank 24 to adsorb phosphorus included in the sludge filtrated liquor W24 to the phosphorus recovery material A.

Mixing time (residence time) in the phosphorus recovery tank 24 is preferably 5 minutes or more and 120 minutes or less, more preferably 15 minutes or more and 60 minutes or less. When the mixing time is less than 5 minutes, the phosphorus recovery performance of the phosphorus recovery process falls, and exceeding 120 minutes causes inferior economical efficiency.

Next, the phosphorus recovery material A with adsorbed phosphorus, that is, the slurry S22 containing recovered material is supplied to the sedimentation tank 26, and after temporarily storing the slurry S23, which is sedimented in the sedimentation tank 26, in the slurry tank 27, the slurry S23 is supplied to the dehydrator 28 and is solid-liquid separated therein. With this, in the dehydration cake C21 can be obtained a phosphorus recovered material. Moreover, the return water W26 generated in the dehydrator 28 is returned to the primary sedimentation tank 2 and others shown in FIG. 1.

On the other hand, the supernatant liquid W25 of the sedimentation tank 26 is also returned to the primary sedimentation tank 2 and others shown in FIG. 1 as a return water.

FIG. 3 shows a batch-type phosphorus recovery equipment 31 as the second example of the phosphorus recovery equipment 11, and the phosphorus recovery equipment 31 is provided with a phosphorus recovery tank 32 with an aeration device 32a and a pH meter 32b to remove carbon dioxide by agitating a sludge filtrated liquor W31 (equivalent to the sludge filtrated liquor W3 in FIG. 1) while adding air thereto; to adjust pH; further to add the phosphorus recovery material A; and to adsorb phosphorus in the sludge filtrated liquor W31 to the phosphorus recovery material A, a slurry tank 33 for recovering a slurry S31 of the phosphorus recovery material A with adsorbed phosphorus from the phosphorus recovery tank 32, a dehydrator 34 for solid-liquid separating the slurry S32 discharged from the slurry tank 33, and so on.

Next, the operation of the phosphorus recovery equipment 31 with the above construction will be explained with reference to FIG. 3.

After receiving the sludge filtrated liquor W31 in the phosphorus recovery tank 32, an acid such as hydrochloric acid is added to adjust the pH value of the sludge filtrated liquor W31 to 6.0 or less preferably 5.3 or less, which allows carbonic acid ion in the sludge filtrated liquor W31 to be changed to carbon dioxide, and agitation with aeration by the aeration device 32a allows carbon dioxide to be removed from the sludge filtrated liquor W31. In addition, with this, the pH value in the phosphorus recovery tank 32 after adding the phosphorus recovery material A becomes 7.0 or more. The kind of the acid will not be asked if carbonic acid ion can be changed to carbon dioxide.

The agitating time is preferably 5 minutes or more and 120 minutes or less, more preferably 15 minutes or more and 60 minutes or less. When the agitating time is less than 5 minutes, concentration of all the carbonic acid in the sludge filtrated liquor W31 becomes high, and the phosphorus recovery performance of the phosphorus recovery material falls, and when it exceeds 120 minutes, it is inferior to economical efficiency.

With the above pH adjustment, the concentration of all the carbonic acid in the sludge filtrated liquor W31 is controlled to preferably be 150 mg/L or less more preferably 100 mg/L or less. When the concentration of all the carbonic acid is 100 mg/L or less, the phosphorus recovery performance of the phosphorus recovery material will become high.

Subsequently, the phosphorus recovery material A (dehydrated cake) is added to the phosphorus recovery tank 32 and is agitated therein to adsorb phosphorus contained in the sludge filtrated liquor W31 to the phosphorus recovery material A. Here, as described above, the pH value of the sludge filtrated liquor W31 is adjusted to be 7.0 or more, which prevents calcium phosphate generated in the phosphorus recovery tank 32 from dissolving on liquid side, and prevents calcium in the phosphorus recovery tank 32 from turning into calcium carbonate, causing calcium phosphate to hardly be generated etc., so that phosphorus can be adsorbed with the phosphorus recovery material A more efficiently.

Agitating time is preferably 5 minutes or more and 120 minutes or less, and more preferably 15 minutes or more and 120 minutes or less. When the mixing time is less than 5 minutes, the phosphorus recovery performance of the phosphorus recovery process falls, and when it exceeds 120 minutes, it is inferior to economical efficiency.

The above-mentioned state is maintained for a while, and when the phosphorus recovery material A with adsorbed phosphorus is settled to the bottom of the phosphorus recovery tank 32, from the bottom thereof is discharged the slurry S31 of the phosphorus recovery material A with adsorbed phosphorus, and is supplied to the slurry tank 33, and the treated water W32 separated from the slurry S31 is returned to the primary sedimentation tank 2 and the like shown in FIG. 1 as a return water.

Subsequently, from the slurry tank 33 is supplied the slurry S32 to the dehydrator 34 to solid/liquid separate it. Thereby, the phosphorus recovered material can be obtained in the dehydration cake C31. The filtrate W33 obtained in the dehydrator 34 is returned to the phosphorus recovery tank 32 and is reused therein.

In the above two embodiments, an acid is added; the pH values of the sludge filtrated liquors W22, W31 are adjusted to be 6.0 or less, preferably 5.3 or less; carbonate ion in these sludge filtrated liquors W22, W31 are changed to carbon dioxide; and agitation with aeration allows carbon dioxide to be removed from the sludge filtrated liquors W22, W31, but this process can be omitted when much carbonate ion is not contained in the sludge filtrated liquors W22, W31.

In order to acquire effective phosphorus fertilizers, it is preferable to apply this phosphorus recovery equipment to a return water or a sludge filtrated liquor as described in the above embodiment, but this phosphorus recovery equipment is also applicable to a thickened sludge or a sludge. In this case, dehydrators and storage tanks that have already been installed in sewage-treatment plants are utilizable to the pH control tanks etc., so that newly installed equipment for performing the phosphorus recovery method of this invention can be lessened. Therefore, this is suitable, when aiming only removal or reduction of phosphorus from waste water, or when using sewage sludge as a fertilizer or a fertilizer raw material.

Next, a test example of the phosphorus recovery method from waste water of this invention will be explained.

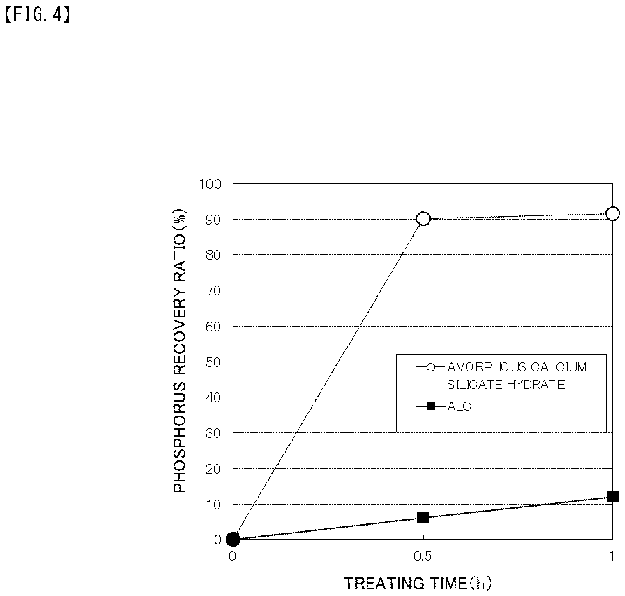

An amorphous calcium silicate hydrate as a practical example, and an ALC, which is a crystalline calcium silicate hydrate as a comparative example were added to sewage sludge filtrated liquors, and phosphorus was recovered by agitating at room temperature for 1 hour. These amounts of addition were set such that the amount of calcium in added materials and the amount of phosphorus in the sewage sludge filtrated liquor became 2.0 by molar ratio. Moreover, a waste water was sampled after 0.5h and 1h from the start of the phosphorus recovery, and phosphorus concentration in liquid was measured with the molybdenum blue absorptiometric method of JIS K0102 (the industrial liquid waste examining method). In addition, phosphorus concentration in the sewage sludge filtrated liquor was 110.0 mg-P/L. The test result is shown in Table 1 and FIG. 4.

[Table 1]

| LEVEL | PHOSPHORUS CONCENTRATION (mg-P/L) | | | PHOSPHORUS RECOVERY RATIO (%) | | | 1h |
|---|---|---|---|---|---|---|---|
| | AMORPHOUS CALCIUM SILICATE HYDRATE | 110 | 11 | 9 | 0 | 90 | 92 |
| COMPARATIVE EXAMPLE | ALC | 110 | 103 | 97 | 0 | 6 | 12 |

As clearly shown in the table 1 and FIG. 4, when the amorphous calcium silicate hydrate of the present invention is used, as compared with the case where ALC is used, it turns out that phosphorus recovery ratio is considerably high.

In addition, in the above-mentioned embodiment, although the case where the phosphorus recovery method from waste water of this invention is applied to waste water of sewage-treatment plants is illustrated, besides sewage-treatment plants, it is also possible to apply this invention to waste water generated in phosphorus sources such as human waste treatment plants and industrial-wastewater-treatment equipment using phosphorus.

Next, an example of manufacturing the phosphorus recovery material used for this invention and verification results of the quality of the phosphorus recovery material will be explained in detail with reference to drawings.

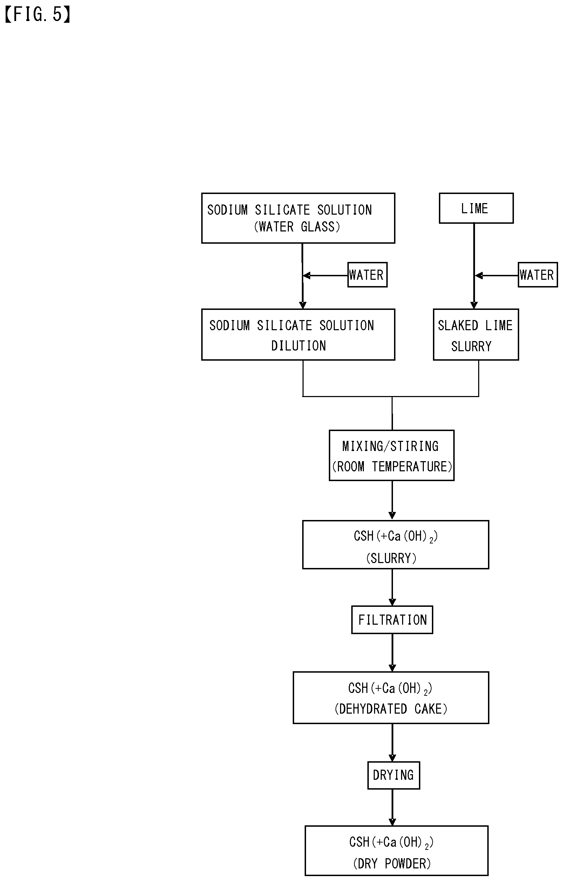

FIG. 5 is a flowchart showing an example of manufacturing the phosphorus recovery material used for this invention.

As for the phosphorus recovery material used for this invention, a sodium silicate solution (water glass) is used as a raw material. For the sodium silicate solution as a raw material can be used one on the market. Since a sodium silicate solution has few impurities, non-dissolved substances other than CSH and $Ca(OH)_2$ that are generated in the manufacturing process hardly arise. Therefore, when recovering CSH simple substances or aggregates of CSH and $Ca(OH)_2$, processes for separating non-dissolved substances other than the above substances are unnecessary, resulting in simple manufacturing processes. Moreover, since non-dissolved things other than the generated amorphous calcium silicate hydrate and $Ca(OH)_2$ incorporated into this are hardly produced, it is possible to use the above-mentioned CSH simple substance and the aggregate of CSH and $Ca(OH)_2$ as the mode of dehydration cake or dried material (powder) also, but it can be used as slurry or paste as it is. Using as slurry or paste unnecessitates dehydrators or dryers, which makes it possible to perform phosphorus recovery while producing phosphorus recovery material locally by establishing a phosphorus recovery material manufacturing facility, and there is also no fear of degradation (carbonization etc.) of the phosphorus recovery material.

A sodium silicate solution and a lime (a slaked lime or a quicklime) are mixed to generate a CSH simple substance or an aggregate of CSH and $Ca(OH)_2$. Since the sodium silicate solution is high in viscosity, water is added thereto to generate an aqueous solution, and to the lime is also added water so as to be slurry, then the both are just mixed. Agitation after the mixing is desirable so that the both may react uniformly. It is not necessary to heat them, and under a room temperature is generated a CSH simple substance or an aggregate of CSH and $Ca(OH)_2$ through reaction of the sodium silicate solution and the lime. What is necessary is just to suitably adjust the amount of lime to be mixed such that Ca/Si molar ratio of the CSH simple substance or the aggregate of CSH and $Ca(OH)_2$ becomes be 0.8-20. The mixing time of the sodium silicate solution and the lime is preferably 10 minutes or more and 120 minutes or less, and more preferably 15 minutes or more and 60 minutes or less. When the mixing time is less than 10 minutes, reaction for generating phosphorus recovery material becomes insufficient, and when it exceeds 120 minutes, it is inferior to economical efficiency.

Ca/Si molar ratio of the CSH or the aggregate of CSH of the phosphorus recovery material of this invention are 0.8-20, preferably 1.0-10. When this value is less than 0.8, phosphorus adsorption performance of the phosphorus recovery material becomes insufficient, and when the value exceeds 20, settleability of the phosphorus recovery material after adsorbing phosphorus will fall. When this value is 0.8-20, the both of the phosphorus adsorption performance and the settleability are high and desirable. In this connection, $Ca(OH)_2$ content of the aggregate (measurement by thermogravimetry/differential thermal analysis (TG-DTA)) is approximately 10 weight % at Ca/Si molar ratio of 1.5; approximately 50 weight % at Ca/Si molar ratio of 5.5; approximately 62 weight % at Ca/Si molar ratio of 10; and approximately 86 weight % at Ca/Si molar ratio of 20.

When a lime is superfluously mixed in a sodium silicate solution exceeding the amount of lime (equivalent) for generating CSH, the CSH incorporates $Ca(OH)_2$ that is produced from the excessive lime, so that an aggregate in which

Ca(OH)$_2$ is distributed inside of the CSH is generated. The aggregate is different from a mixture that is generated by merely mixing Ca(OH)$_2$ to a CSH that does not contain Ca(OH)$_2$, which is generated by equivalently mixing a sodium silicate solution and a lime, and has higher settleability.

Moreover, as a phosphorus recovery material of this invention, phosphorus recovery ratio is 60% or more is preferable and 70% or more is more preferable, which are obtained by feeding the phosphorus recovery material to a phosphorus containing water such that the amount of calcium in the phosphorus recovery material to the amount of phosphorus in the phosphorus containing water is 2 by Ca/P molar ratio and agitating 100mL of the phosphorus containing water with the phosphorus recovery material at 20 degrees Celsius for 1 hour. When this value is 60% or more, phosphorus concentration in the phosphorus recovery material after adsorbing phosphorus is sufficiently high, so that it can be utilized as a phosphate fertilizer with high fertilizer effect.

Here, the phosphorus recovery ratio is calculated by the following formula.

$$R=100 \times (P0-P)/P0$$

In this formula, R expresses phosphorus recovery ratio (%); P0 expresses phosphorus concentration in the phosphorus containing water before adding the phosphorus recovery material; and P expresses phosphorus concentration in a filtrate that is obtained by filtering the phosphorus containing water after adding phosphorus recovery material and adsorbing phosphorus thereto.

Moreover, as a phosphorus recovery material of this invention, one whose settleability index is 60% or more is preferable, and 75% or more is more preferable. When this value is 60% or more, separation of recovery material after adsorbing phosphorus is easily performed, and the amount of settled slurry of phosphorus recovered material, which is dehydrated, can be reduced. In addition, since there is no suspending substance containing phosphorus in a supernatant liquid, the supernatant liquid can be drained without filtering it when other components are regulated.

The settleability index is obtained by the following procedures (i) to (v):

(i) A phosphorus recovery material, and a 100mL of phosphorus containing water whose phosphorus concentration (P0) is known are mixed such that the amount of calcium in the phosphorus recovery material added to the amount of phosphorus in the phosphorus containing water is 2 by Ca/P molar ratio at 20 degrees Celsius for 1 hour to prepare a liquid mixture;

(ii) A part of the above liquid mixture is filtered to separate a filtrate, and phosphorus concentration (P) in the filtrate is measured to calculate the phosphorus recovery ratio R1. The phosphorus concentration can be measured based on the molybdenum blue absorptiometric method specified to JIS K 0102 "industrial liquid waste test method", for example;

(iii) The remainder of the liquid mixture is settled for a predetermined period of time, and 60mL of upper suspension is separated through decantation;

(iv) To the separated upper suspension is added hydrochloric acid to make pH value of the suspension 1, and suspending substance is dissolved by agitation, and then phosphorus concentration (p) in the solution is measured to calculate the phosphorus recovery ratio (R2); and

(v) The settleability index (S) is calculated by the following formula.

$$S(\%) = \{1-(R1-R2)/R1\} \times 100$$

Furthermore, the BET specific surface area and the pore volume of the phosphorus recovery material of this invention are preferably 30-80m$^2$/g and 0.1-0.3cm$^3$/g respectively. When the BET specific surface area and the pore volume are in the above-mentioned ranges, phosphorus adsorption performance of the phosphorus recovery material will be improved much more.

Hereinafter, an example of manufacturing the phosphorus recovery material used for this invention will be shown with a comparative example.

[Verification Example 1: Generations of CSH simple substance and CSH aggregate]

A tap water of the quantity shown in Table 2 was equally divided into two; they were respectively added to the sodium silicate aqueous solution (water glass No. 3) and the slaked lime (slaked lime made by Yakusen Sekkai Co. ltd., based on special slaked lime regulated in JIS R 9001:2006) of the quantity that are shown in Table 2 to agitate them; and a diluted solution of a sodium silicate aqueous solution and a slurry of lime were prepared. Next, the diluted solution and the slurry were mixed with the Ca/Si compounding ratio shown in Table 2; it was agitated at room temperature for an hour; and a CSH and a CSH aggregate with desired Ca/Si molar ratios were generated. Here, the Ca/Si compounding ratio is a molar ratio of Ca in the lime as a raw material to Si in the sodium silicate aqueous solution.

[Table 2]

| SAMPLES | Ca/Si COMPOUNDING MOLAR RATIO | RAW MATERIAL MIX PROPOTION | | | PHOSPHORUS RECOVERY MATERIAL | | |
|---|---|---|---|---|---|---|---|
| | | AMOUNT OF RAW SILICATE (g) | AMOUNT OF SLAKED LIME (g) | AMOUNT OF WATER (g) | Ca/Si MOLAR RATIO | SPECIFIC SURFACE AREA $(m^2/g)$ | PORE VOLUME $(cm^3/g)$ |
| 1 | 0.5 | 55.8 | 10 | 244 | 0.5 | 85 | 0.35 |
| 2 | 0.8 | 34.9 | 10 | 265 | 0.8 | 78 | 0.30 |
| 3 | 1.0 | 27.9 | 10 | 272 | 1.1 | 62 | 0.26 |
| 4 | 1.5 | 18.6 | 10 | 281 | 1.5 | 58 | 0.25 |
| 5 | 5.5 | 5.1 | 10 | 294 | 5.5 | 43 | 0.19 |
| 6 | 10 | 2.8 | 10 | 297 | 10 | 33 | 0.16 |
| 7 | 20 | 1.4 | 10 | 299 | 20 | 30 | 0.14 |
| 8 | 30 | 0.7 | 10 | 300 | 30 | 24 | 0.11 |
| 9 | 1.1 | 16.3 | 10 | 210 | 1.1 | 58 | 0.25 |

As for the sample 9, after adding NaOH of the amount of 0.5 wt% (outer percent) to a tap water and warming them at 70 degrees Celsius, a siliceous shale (produced in Hokkaido, 45% of alkali soluble $SiO_2$ is contained), which was ground in grain size of 1mm or less, was thrown; it was agitated by the same temperature for an hour; and the alkali soluble silica in a siliceous shale was dissolved. A slaked lime (a slaked lime made by Yakusen Sekkai Co. ltd., based on special slaked lime regulated in JIS R 9001:2006) was added to the silica solution; and it was heated at 70 degrees Celsius; it was agitated for three hours to hydrothermally synthesize CSH. After the synthesis, a non-dissolved residual substance was separated by decantation, and a phosphorus recovery material suspended in a supernatant liquor was recovered.

Ca/Si molar ratios in a slurry-like CSH and a CSH aggregate were measured based on JIS R 5202 "Methods for chemical-analysis of Portland cements". These results are shown in Table 3.

Moreover, BET specific surface area and pore volume were measured for samples that were deaerated in vacuum at 150 degrees Celsius for an hour with the nitrogen adsorption method (the BJH method) with the specific surface area measuring devices ASAP-2400 made by Micrometrics Corporation. This result is shown in Table 3.

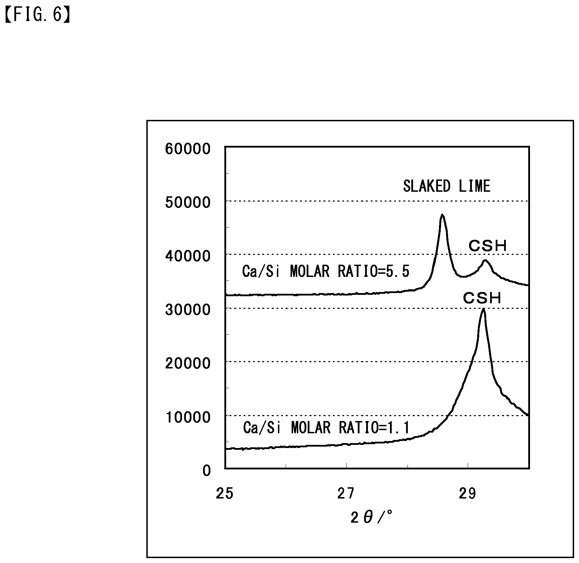

Further, XRD charts of dry powders of the sample 3 whose Ca/Si molar ratio is 1.1 and the sample 5 whose Ca/Si molar ratio is 5.5 are shown in Fig. 6. As shown in these charts, a peak of CSH only was appeared in the sample 3, and peaks of CSH and $Ca(OH)_2$ were appeared in the sample 5.

[Verification Example 2: Phosphorus recovery ratio and settleability]

As a phosphorus content water, a dehydration filtrate (phosphorus concentration (P0) is 100 mg/L, total carbonic acid concentration is 1500 mg/L) of an excess sludge generated in a sewage-treatment plant was used. As for the phosphorus recovery materials of the samples 1-8 and the slaked lime of comparative example (the slaked lime made by Yakusen Sekkai Co. ltd., based on special slaked lime regulated in JIS R 9001:2006), hydrochloric acid was dropped to the phosphorus content water until pH value thereof became 5.3, and the phosphorus content water was decarbonated (total carbonic acid concentration is 69 mg/L) to be used for this test. As for the phosphorus recovery materials of samples 2, 3, 4, 5, 7, and 9, the phosphorus content water that was not decarbonated was also used (for 2B, 3B, 4B, 5B, 7B, 9B, and 5C).

After mixing a slurry (reaction liquid) of the phosphorus recovery material to a 100g of the dehydration filtrate in such a manner that the amount of calcium in the added phosphorus recovery material to the amount of phosphorus in the dehydration filtrate becomes 2 by Ca/P molar ratio, the mixed liquid was agitated at room temperature (20 degree Celsius) for an hour to allow phosphorus to be adsorbed to the phosphorus recovery material. In addition, as for the phosphorus recovery material of the sample 5, a test when they are mixed such that the Ca/P molar ratio becomes 3 was also performed (the sample 5C shows the result).

Next, a part (5ml) of the mixed liquid was filtrated with a filter paper 5C, and phosphorus concentration (P) of the obtained filtrate was measured, and the phosphorus recovery ratio (R1) was calculated.

Moreover, after the remainder of the mixed liquid was fed to a graduated cylinder of 100mL and left for an hour, an upper suspension 60mL was separated by decantation. Hydrochloric acid was added to the separated suspension to adjust the pH value thereof to 1; a suspended solid was dissolved by agitation; phosphorus concentration (P) in the solution was measured; the phosphorus recovery ratio (R2) was calculated; and settleability index (S) was calculated also. These results are shown in Table 3.

In addition, the measurement of the phosphorus concentration was performed based on the molybdenum blue absorptiometric method regulated in JIS K 0102 "Testing methods for industrial wastewater". The measurement of total carbonic acid concentration was measured in inorganic carbon (IC) mode using the total organic carbon analysis equipment (TOC-Vcsn: made by Shimadzu Corporation).

[Table 3]

| SAMPLES | Ca/Si MOLAR RATIO | PHOSPHORUS RECOVERY RATIO (%) | | SETTLEABILITY INDEX % |
|---|---|---|---|---|
| | | R OR R1 | R2 | |
| 1 | 0.5 | 65 | 64 | 98 |
| 2 | 0.8 | 91 | 90 | 99 |
| 3 | 1.1 | 92 | 89 | 97 |
| 4 | 1.5 | 91 | 87 | 96 |
| 5 | 5.5 | 93 | 82 | 88 |
| 6 | 10 | 94 | 77 | 82 |
| 7 | 20 | 94 | 66 | 70 |
| 8 | 30 | 94 | 48 | 51 |
| SLAKED LIME | - | 92 | 41 | 45 |
| 2B | 0.8 | 83 | - | - |
| 3B | 1.1 | 82 | - | - |
| 4B | 1.5 | 74 | - | - |
| 5B | 5.5 | 43 | - | - |
| 7B | 20 | 26 | - | - |
| 9B | 1.1 | 60 | - | - |
| 5C | 5.5 | 90 | 71 | 79 |

As shown in Table 3, about the phosphorus recovery ratio (R1), the sample 1 whose Ca/Si molar ratio is 0.5 is 65%, and the samples 2-7 whose Ca/Si molar ratio are in a range of 0.8-20 are 91%-94%, so that the phosphorus recovery materials of the present invention have greatly high phosphorus recovering function.

Moreover, about the settleability index, the sample 8 whose Ca/Si molar ratio is 30 is 51%, a slaked lime is 45%, and the samples 2-7 whose Ca/Si molar ratios are in a range of 0.8-20 are 70 or more %, so that the phosphorus recovery materials of the present invention have excellent settleability.

As for the samples 2B, 3B, 4B, 5B, and 7B using phosphorus content waters that decarbonation is not performed, although Ca/Si molar ratios and amounts of mixtures are equal, phosphorus recovery ratios (R1) fall in comparison to the cases where the phosphorus content water that decarbonation is performed are used. However, in cases of 2B, 3B, 4B and 5B whose Ca/Si molar ratios are low, the degree of fall is small, and the phosphorus recovery ratios (R1) are 80% or more.

Even in case that phosphorus content water that decarbonation is not performed is used also, in the case 5C in which the amount of mixtures was increased, the phosphorus recovery ratio (R1) is 90%, and the settleability index is 79%, like this, when amount of phosphorus recovery material added is increased, almost the same performance is shown as the case that phosphorus content water that decarbonation was performed is used, and when removing phosphorus from waste water is aimed only, high phosphorus recovery ratio can be obtained without pH treatment.

Moreover, in case that a phosphorus containing water that decarbonation was not performed in spite of high carbonic acid ion concentration thereof is used, the phosphorus recovery ratio (R1) of the sample 9B manufactured by hydrothermal synthesis is 60%, but high recovery ratio can be obtained by using the phosphorus recovery material, whose Ca/Si molar ratio is 2.0 or less, manufactured from a sodium silicate aqueous solution. It is understood from the result of the 5C that slightly increasing the amount of additive is effective in order to raise the phosphorus recovery ratio (R) further.

[Verification example 3: Property of phosphorus fertilizer]

About samples 3B, 5 and 5B, filtrating phosphorus recovered materials after phosphorus was recovered with filter papers provided phosphorus recovered materials for this test to be obtained. These recovered materials were dried at 105 degree Celsius for twelve hours, citric acid-soluble phosphate concentration, nitrogen concentration, and potassium concentration are measured for the dried materials based on testing methods for fertilizers.

In addition, the official standard of phosphate acid fertilizer byproduct is an official standard for ordinary fertilizers that is specified based on the Fertilizer Control Law in Japan (February 22, Showa 61 (1986), Ministry of Agriculture, Forestry, and Fisheries notification No. 284), and exactly, fertilizers whose citric acid-soluble phosphate acid concentration is 15 or more % are regulated. Here, although there is no regulation of nitrogen and potassium, fertilizers whose nitrogen and potassium exceed 1% are classified into chemical fertilizers, and flexibility will become low compared with the phosphate fertilizer byproduct.

[Table 4]

| SAMPLES | Ca/Si MOLAR RATIO | CONSTITUENT CONCENTRATION (%) | | |
|---|---|---|---|---|
| | | CITRIC ACID-SOLUBLE PHOSPHATE ACID | NITROGEN | POTASSIUM ($K_2O$) |
| 3B | 1.1 | 18.9 | 0.8 | 0.05 |
| 5 | 5.5 | 22.5 | 0.8 | 0.05 |
| 5B | 5.5 | 11.8 | 0.9 | 0.06 |
| OFFICIAL STANDARD OF PHOSPHATE ACID FERTILIZER BYPRODUCT | | 15%OR MORE | 1% LESS THAN | 1% LESS THAN |

As shown in Table 4, the citric acid-soluble phosphate acid concentrations are high such as 18.9%, 22.5% and 11.8%, which shows that sufficient fertilizer effects can be acquired, and especially when a decarbonated phosphorus containing water is used, flexible phosphate fertilizer byproducts are obtainable. Moreover, as shown in this verification example, even the material as it is provides fertilizer effect, and it can be used as a fertilizer or a fertilizer raw material as it is.

[Verification Example 4: Addition of the phosphorus recovery material to sludge]

As a sludge is used an excess sludge (total carbonic acid concentration of the filtered liquid is 91 mg/L) that is obtained by adding hydrochloric acid to the excess sludge used in the Verification Example 2 until pH value thereof becomes 5.3 and decarbonating it. As for the sample 4, to a 100g of the excess sludge was mixed a slurry (reaction liquid) of the phosphorus recovery material in such a manner that the amount of calcium in the supplied phosphorus recovery material to the amount of phosphorus in the liquid becomes 2.5 by Ca/P molar ratio, and then this excess sludge was agitated at room temperature for 1 hour to adsorb phosphorus to the phosphorus recovery material.

Next, a part of mixture of the excess sludge and the phosphorus recovered material was filtered using the filter paper 5C, and the phosphorus concentration (P) in the obtained filtrate was measured to calculate the phosphorus recovery ratio (R).

The phosphorus recovery ratio (R) to phosphorus in the liquid is 92%. The present phosphorus recovery materials have high phosphorus recovery performance regardless of presence or absence of solid contained in phosphorus containing water. Therefore, phosphorus included in the liquid is also recovered as dehydration sludge, so that all of the phosphorus can effectively be utilized when the dehydration sludge is used as a fertilizer raw material.

EXPLANATION OF REFERENCE NUMBERS

[0101]

1 sewage-treatment plant
2 primary sedimentation tank
3 biological treatment tank
4 final sedimentation tank
5 concentration tank
6 concentrator
7 storage tank
8 methane fermentation tank
9 storage tank
10 dehydrator
11 phosphorus recovery equipment
12 phosphorus recovery process
13 recovered material separation process
14 phosphorus fertilizing equipment
15 dryer
16 granulating machine
21 phosphorus recovery equipment
22 first pH control tank
22a pH meter
23 second pH control tank
23a aeration device
23b pH meter
24 phosphorus recovery tank
24a pH meter
25 CSH slurry adjustment tank
26 sedimentation tank
27 slurry tank
28 dehydrator
31 phosphorus recovery equipment
32 phosphorus recovery tank
32a aeration device
32b pH meter
33 slurry tank
34 dehydrator

**Claims**

1. A phosphorus recovery method comprising the steps of:

   adsorbing phosphorus in a waste water from a phosphorus source to a phosphorus recovery material formed of an amorphous calcium silicate-based material; and recovering the phosphorus recovery material with the adsorbed phosphorus, said method **characterized in that**
   said phosphorus recovery material is an amorphous calcium silicate hydrate alone or an aggregate of an amorphous calcium silicate hydrate and $Ca(OH)_2$ with a Ca/Si molar ratio of 0.8 or more and 20 or less, wherein said amorphous calcium silicate hydrate alone or said aggregate of the amorphous calcium silicate hydrate and $Ca(OH)_2$ is generated in an unheated state after mixing a sodium silicate solution and a lime, and said phosphorus recovery material is a solid matter obtained by solid-liquid separation and drying said amorphous calcium silicate hydrate alone or said aggregate of the amorphous calcium silicate hydrate and $Ca(OH)_2$, or a slurry or a paste including said amorphous calcium silicate hydrate alone or said aggregate of the amorphous calcium silicate hydrate and $Ca(OH)_2$.

2. The phosphorus recovery method as claimed in claim 1, wherein a pH value of a waste water that is obtained by adding the phosphorus recovery material to the waste water from the phosphorus source is adjusted to be 7.0 or higher.

3. The phosphorus recovery method as claimed in claim 1 or 2, wherein said phosphorus recovery material is added after the waste water from the phosphorus source is decarbonated by reducing a pH value thereof to 6.0 or lower.

4. The phosphorus recovery method as claimed in claim 1, 2 or 3, wherein a slurry containing the phosphorus recovery material that adsorbs phosphorus in the waste water is solid-liquid separated to obtain a dehydrated cake-like phosphorus recovered material, and an obtained filtrate is used at the phosphorus source.

5. The phosphorus recovery method as claimed in one of claims 1 to 4, wherein said phosphorus source is a sewage-treatment plant.

6. The phosphorus recovery method as claimed in one of claims 1 to 5, wherein said waste water is a waste water that is separated from a sludge generated at the sewage-treatment plant.

7. A method for recovering phosphorus and using the same as fertilizer **characterized by** producing a fertilizer from the phosphorus recovered material recovered by the method claimed in one of claims 1 to 6.

**Patentansprüche**

1. Verfahren zur Rückgewinnung von Phosphor, umfassend die folgenden Schritte:

   Adsorbieren von Phosphor in einem Abwasser aus einer Phosphorquelle an ein Phosphorrückgewinnungsmaterial, das aus einem Material auf der Basis von amorphem Calciumsilicat gebildet ist;
   und Rückgewinnen des Phosphorrückgewinnungsmaterials mit dem adsorbierten Phosphor, wobei das Verfahren **dadurch gekennzeichnet ist,**
   **dass** das Phosphorrückgewinnungsmaterial ein amorphes Calciumsilicathydrat allein oder ein Aggregat aus einem amorphen Calciumsilicathydrat und $Ca(OH)_2$ mit einem Ca/Si-Molverhältnis von 0,8 oder mehr und 20 oder weniger ist, wobei das amorphe Calciumsilicathydrat allein vorliegt oder das Aggregat des amorphen Calciumsilicathydrats und $Ca(OH)_2$ in einem nicht erhitzten Zustand nach dem Mischen einer Natriumsilicatlösung und eines Kalks erzeugt wird, und das Phosphorrückgewinnungsmaterial ein Feststoff ist, der durch Fest-Flüssig-Trennung und Trocknen des amorphen Calciumsilicathydrats allein erhalten wird, oder das Aggregat des amorphen Calciumsilicathydrats und $Ca(OH)_2$ oder eine Aufschlämmung oder Paste ist, die das amorphe Calciumsilicathydrat allein oder das Aggregat des amorphen Calciumsilicathydrats und $Ca(OH)_2$ enthält.

2. Verfahren zur Rückgewinnung von Phosphor nach Anspruch 1, wobei ein pH-Wert eines Abwassers, der durch Hinzufügen des Phosphorrückgewinnungsmaterials zu dem Abwasser aus der Phosphorquelle erhalten wird, auf 7,0 oder höher eingestellt wird.

3. Verfahren zur Rückgewinnung von Phosphor nach Anspruch 1 oder 2, wobei das Phosphorrückgewinnungsmaterial hinzugefügt wird, nachdem das Abwasser aus der Phosphorquelle entkarbonisiert worden ist, indem dessen pH-Wert auf 6,0 oder niedriger verringert wurde.

4. Verfahren zur Rückgewinnung von Phosphor nach Anspruch 1, 2 oder 3, wobei eine Aufschlämmung, die das Phosphorrückgewinnungsmaterial enthält, das den Phosphor in dem Abwasser adsorbiert, fest-flüssig-getrennt wird, um ein dehydratisiertes kuchenartiges Phosphorrückgewinnungsmaterial zu erhalten, und ein erhaltenes Filtrat als Phosphorquelle verwendet wird.

5. Verfahren zur Rückgewinnung von Phosphor nach einem der Ansprüche 1 bis 4, wobei die Phosphorquelle eine Kläranlage ist.

6. Verfahren zur Rückgewinnung von Phosphor nach einem der Ansprüche 1 bis 5, wobei das Abwasser ein Abwasser ist, das von einem in der Kläranlage erzeugten Schlamm getrennt wird.

7. Verfahren zur Rückgewinnung von Phosphor und Verwendung desselben als Düngemittel, **gekennzeichnet durch** die Herstellung eines Düngemittels aus dem **durch** das Verfahren nach einem der Ansprüche 1 bis 6 rückgewonnenen Phosphorrückgewinnungsmaterial.

**Revendications**

1. Procédé de récupération de phosphore comprenant les étapes de :

   adsorption du phosphore dans une eau de déchets à partir d'une source de phosphore à un matériau de récupération de phosphore formé d'un matériau à base de silicate de calcium amorphe ;
   et récupération du matériau de récupération de phosphore avec le phosphore adsorbé, ledit procédé **caractérisé en ce que**
   ledit matériau de récupération de phosphore est un hydrate de silicate de calcium amorphe seul ou un agrégat d'un hydrate de silicate de calcium amorphe et de $Ca(OH)_2$ avec un rapport molaire Ca/Si de 0,8 ou plus et 20 ou moins, où ledit hydrate de silicate de calcium amorphe seul ou ledit agrégat de l'hydrate de silicate de calcium amorphe et de $Ca(OH)_2$ est produit dans un état non chauffé après le mélange d'une solution de silicate de sodium et d'une chaux, et ledit matériau de récupération de phosphore est une matière solide obtenue par séparation solide-liquide et le séchage dudit hydrate de silicate de calcium amorphe seul ou dudit agrégat de l'hydrate de silicate de calcium amorphe et de $Ca(OH)_2$, ou une solution épaisse ou une pâte comprenant ledit hydrate de silicate de calcium amorphe seul ou ledit agrégat d'hydrate de silicate de calcium amorphe et de $Ca(OH)_2$.

2. Procédé de récupération de phosphore selon la revendication 1, dans lequel une valeur de pH d'une eau de déchets qui est obtenue par addition du matériau de récupération de phosphore à l'eau de déchets de la source de phosphore est ajusté pour être de 7,0 ou plus.

3. Procédé de récupération de phosphore selon la revendication 1 ou 2, dans lequel ledit matériau de récupération de phosphore est ajouté après l'eau de déchets de la source de phosphore est décarboné en réduisant une de ses valeurs de pH à 6,0 ou moins.

4. Procédé de récupération de phosphore selon la revendication 1, 2 ou 3, dans lequel une solution épaisse contenant le matériau de récupération de phosphore qui adsorbe le phosphore dans l'eau de déchets est séparé en solide-liquide pour obtenir un matériau récupéré de phosphore de type gâteau déshydraté et un filtrat obtenu est utilisé à la source de phosphore.

5. Procédé de récupération de phosphore selon l'une des revendications 1 à 4, dans lequel ladite source de phosphore est une usine de traitement des eaux usées.

6. Procédé de récupération de phosphore selon l'une des revendications 1 à 5, dans lequel ladite eau de déchets est une eau de déchets qui est séparé d'une boue produite à l'usine de traitement des eaux usées.

7. Procédé de récupération de phosphore et utilisation de celui-ci comme engrais **caractérisé par** la production d'un engrais à partir du matériau récupéré de phosphore récupéré par le procédé selon l'une des revendications 1 à 6.

【FIG. 1】

EP 2 724 987 B1

【FIG. 2】

【FIG. 3】

【FIG. 4】

【FIG. 5】

```
┌──────────────────────────┐        ┌──────────┐
│  SODIUM SILICATE SOLUTION │        │   LIME   │
│      (WATER GLASS)        │        └────┬─────┘
└────────────┬─────────────┘             │
             │        ┌───────┐          │        ┌───────┐
             │◄───────│ WATER │          │◄───────│ WATER │
             │        └───────┘          │        └───────┘
             ▼                           ▼
┌──────────────────────────┐        ┌──────────────┐
│  SODIUM SILICATE SOLUTION │        │  SLAKED LIME │
│        DILUTION           │        │    SLURRY    │
└────────────┬─────────────┘        └──────┬───────┘
             │                              │
             └──────────────┬───────────────┘
                            ▼
                 ┌────────────────────────┐
                 │    MIXING/STIRING      │
                 │  (ROOM TEMPERATURE)    │
                 └───────────┬────────────┘
                             ▼
                 ┌────────────────────────┐
                 │   CSH (+Ca(OH)$_2$)    │
                 │       (SLURRY)         │
                 └───────────┬────────────┘
                             ▼
                     ┌────────────┐
                     │ FILTRATION │
                     └─────┬──────┘
                           ▼
                 ┌────────────────────────┐
                 │   CSH (+Ca(OH)$_2$)    │
                 │   (DEHYDRATED CAKE)    │
                 └───────────┬────────────┘
                             ▼
                       ┌──────────┐
                       │  DRYING  │
                       └────┬─────┘
                            ▼
                 ┌────────────────────────┐
                 │   CSH (+Ca(OH)$_2$)    │
                 │     (DRY POWDER)       │
                 └────────────────────────┘
```

【FIG. 6】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009285635 A

- JP 2009285636 A

**Non-patent literature cited in the description**

- Fertilizer Control Law in Japan. Ministry of Agriculture, Forestry, and Fisheries. Showa, 22 February 1986, vol. 61